# EUROPEAN PATENT SPECIFICATION

(11) **EP 1 495 378 B1**
(45) Date of publication and mention of the grant of the patent: **05.07.2006**
(21) Application number: 02718741.8
(22) Date of filing: 28.03.2002
(51) Int. Cl.: G05B 19/418, G06F 19/00, G06F 9/40

(54) **AN ARRANGEMENT AND A METHOD FOR SUPPORTING PROCESS/APPLICATION CONTROL**
ANORDNUNG UND VERFAHREN ZUM UNTERSTÜTZEN DER PROZESS-/ANWENDUNGSSTEUERUNG
DISPOSITIF ET PROCEDE POUR LA PRISE EN CHARGE DE LA COMMANDE DE PROCESSUS/D'APPLICATION

(43) Date of publication of application: 12.01.2005
(73) Proprietor: TELEFONAKTIEBOLAGET LM ERICSSON (publ), 164 83 Stockholm (SE)
(72) Inventor: BRODD, Patrik, S-436 55 Hoväs (SE); RUSTEN, Jessica, S-412 72 Göteborg (SE)
(74) Representative: Bergentall, Annika Maria
(86) International application number: PCT/SE2002/000627
(87) International publication number: WO 2003/083590

(56) References cited:
- EP-A1- 0 716 364
- EP-A2- 0 411 295
- EP-A2- 1 191 309
- WO-A1-99/45489
- US-A- 5 305 206
- US-A- 5 515 267
- US-A- 6 047 293
- US-B1- 6 256 651
- DATABASE WPI Week 199910, Derwent Publications Ltd., London, GB; Class T01, AN 1999-110612, XP002903071 & JP 10 333 717 A (ICHIKAWA A) 18 December 1998

## Description

### FIELD OF THE INVENTION

The present invention relates to an arrangement for controlling or for supporting control of processes of a system wherein a number of processes are provided/defined for supporting execution of a number of manually driven processes, each process comprising a number of steps or nodes, for each process step a spreadsheet being provided which comprises the indata parameters required for the actions to be taken in the process step. The invention also relates to a method for controlling/supporting control of processes of a system or of an entire system solution which comprises the steps, for performing a specific process, of; providing/defining a number of processes for supporting execution of manually driven process(es), each comprising a number of process steps (nodes); providing a spreadsheet for each process step comprising the relevant indata parameters for at least one process step.

### STATE OF THE ART

For an operator or an administrator of a system it is often complicated and time consuming to administrate or control it, particularly when there are a number of stand-alone, cooperating, parallell, sequential or intervening processes or applications with equipment or entities on different levels. The situation is complicated for instance when updates, amendments or removal of equipment or entities or data is concerned or when new equipment or new users are to be added etc. Generally it will then be necessary to update several applications and/or processes, and it may be necessary to enter an enormous amount of parameters to the different, processes, entities or equipment and/or to subsystems. It is a complicated situation for an operator or for an administrator who needs to keep control of all locations where some action has to be taken, to have the parameters required for each specific location and to have said parameters available in time.

One example on a solution where such problems are apparent is within IP (Internet Protocol) telephony or telecommunication systems solutions. One such solution is based on a concept using Application Service Providers (ASP), Service Providers (SP) and a number of Enterprises. An ASP then owns all the equipment and it provides an administration portal and a user portal to a number of SPs. The ASP sells or provides either all of its services or a subset of its services to one or more SPs. Each SP in turn sells all or a subset of its services (the same subset or different subsets) to one or more Enterprises. Each Enterprise can be said to comprise a number of end users. Such a solution/system is process oriented and role driven. It is important to be able to control the flow of events in order to be able to drive the respective, involved processes forward. One of the reasons therefore is that an IP telephony solution comprises a large number of different applications and processes, and it is very difficult and complex to be able to keep the systems, or the relevant systems thereof, updated when for example adding/amending/removing SPs, Enterprises or end users. This strongly emphasizes the need for process control, in other words, several applications or processes, nodes and entities need to be updated, and a large number of parameters have to be entered in the appropriate manner to the different applications/systems or processes. Different processes are involved for adding/removing or updating different pieces of equipment and still further processes are involved for modification of different entities or pieces of equipment or for example end users. There are several process controlled system solutions available on the market, but several of them show a lack of satisfactory support for control or administration thereof. There is often also no satisfactory and easy way for an operator or an administrator to actually control the flow of events necessary to drive a process forward to a sufficient extent and in a manner which is easy and uncomplicated.

JP-A-10-333717 discloses a method in which spreadsheets are used, in which execution steps, process flow conditions and required instructions of a flowchart are stored. The flowchart is suitably structured based on the stored data. When program execution is required, the structured flowchart is used to obtain a logical expression.

EP-A-1 191 309 shows a system in which a spreadsheet program is used at an operating unit to display and optionally display and optionally modify the parameter values of a measuring device. The representational data is stored in a file in the measuring device in a format adapted to the program used.

WO-A-99/45489 shows a system where survey results are provided to a client in spreadsheet format including unformatted data processing, analyzing and software or computer instructions.

### SUMMARY OF THE INVENTION

It is therefore an object of the present invention to provide an arrangement that facilitates for e.g. an administrator or an operator or similar to control or administrate a system solution in a controlled way, i.e. to facilitate the control of the flow of events required to drive a process forwards. It is particularly an object of the invention to suggest an arrangement for supporting control of processes within a system solution with a number of systems. It is particularly an object to provide an arrangement through which the control of the flow of events required to drive the process forward is facilitated. Further yet it is an object to provide an arrangement through which process control is enabled or at least facilitated and supported as far as amendments, updates, removals, modifications, adding of new equipment etc. is concerned. Particularly equipment here refers to data concerning end users or individuals, or simply users in any form, as well as actual equipment or entities.

It is also an object of the present invention to provide a method through which one or more of the above mentioned objects can be achieved.

Particularly it is an object of the invention to provide an arrangement or a method respectively which supports process control within IP telephony system solutions. Even more particularly it is an object to provide an arrangement and a method respectively supporting and facilitating process control for administrators or operators in an IP telephony system solution based on an ASP, SP and Enterprise concept as referred to earlier in the application. In general it is an object to provide for support or control of processes and systems in for example an IP telephony system solution or any other system solutions which per se involves a large number of different applications and processes, of which one or more, generally several, will be involved as far as updates, etc. or any modification is concerned. Particularly when some applications or processes are more or less independent of one another whereas others are strongly dependent on one another, and wherein equipment and entities are provided on different system (solution) levels, and a process may involve different systems or pieces of equipment etc. on different levels, but also on the same level.

Therefore an arrangement as initially referred to is provided in which for each process step furthermore an operation instruction document (OID) is provided, which comprises information about the measures/actions to be taken in the step, and about the order in which the actions/measures are to be taken. This is done in such a manner that, when the actions/measures of a step have been taken, it is proceeded with the subsequent step of the provided/defined process using the spreadsheet and operation instruction document relevant for that subsequent step. The respective operation instruction documents are written on a system level, the defined/provided process(es) being used for control of/replace(s) processes within an IP-telephony system solution, and the IP-telephony system solution comprises entities on different levels, e.g. a number of Application Service Provider(s) controlling the system equipment and providing a user portal and an administration portal to a number of Service Providers, each Application Service Provider offering at least parts of its services to said Service Providers, each of which in turn offer their services, or at least parts thereof, to a number of Enterprises comprising a number of end users.

Particularly an OID is written on different levels of the system.

Preferably each OID is written on different system levels. Preferably the parameters of a spreadsheet are defined before the relevant process step is initiated.

In one implementation, or rather depending on process, one and the same spreadsheet can be used for two or more steps of a created process, then it must however contain indications about which parameters that are relevant for each respective step. It is also possible that the same parameters can be relevant for more than one step of a process, or even for all steps of a process. Particularly some of the parameters of a spreadsheet are used for more than one process step, and parameters of a spreadsheet that are reused for different process steps, are updated automatically when there has been a change or modification, i.e. data has been updated, entered or removed. Alternatively the parameters of a spreadsheet that are reused are updated manually.

According to the invention the creation or drawing of a process includes a mapping to a spreadsheet and to an OID. Particularly there is a mapping for each process step to a specific spreadsheet and to a specific OID, also when the same spreadsheet is used for all steps of the process. In one implementation a process step or a process is mapped to more than one OID.

Particularly the mapping is done to a specific version and/or to a specific identity of a spreadsheet, as well as to a specific or relevant version and/or to a specific or relevant identity of an OID for each step. Thus, often different versions or identities of one and the same OID are mapped to the different process steps of a manually driven process. It is however also possible that the different process steps of a process are mapped to entirely different OIDs. A process often involves entities or equipment on different system levels. According to the invention the OIDs are written on different system levels, and give a detailed description of which steps that have to be performed and in which order the steps have to be performed, if parallelly or sequentially.

In a particular implementation a manually driven process can support fault handling and rollback.

A number of manually driven processes may be defined or provided for supporting execution of one or more of the processes, e.g. relating to creation of a new SP/Enterprise, modification of an SP/Enterprise, removal of an SP/Enterprise, or creation of a new end user, modification of an end user or deletion of an end user. Particularly different entities are responsible for different steps within a defined or provided manually driven process, i.e. one and the same process, and information about which entity that is responsible for a given step of a process is given by the OID to which the process step is mapped. The invention actually comprises an arrangement including a combination of processes, OIDs and spreadsheets, and the inventive concept can with an advantage be used for any processes when manual control is required or, particularly when it has been realized that manual control of processes with advantage can be introduced according to the invention, not only for IP telephony system solutions, on the contrary, this merely relates to one specific implementation in which the concept with advantage can be implemented.

The invention therefore also suggests a method as initially referred to which comprises the step of providing an operation instruction document (OID), which is written on system level, and which is relevant for at least one step of the created process, which operation instruction document at least comprises information about the actions/measures to be taken in said respective step, and about the order in which the actions/measures/steps are to be taken. According to the inventive method, the spreadsheet parameters are input when a step is to be performed, and the relevant operation instruction document is used to perform the step. Using the operation instruction documents it will also be possible to proceed with the subsequent process step by inputting the spreadsheet relevant for that step etc. until the entire process has been completed.

The system in which the method is implemented comprises an IP telephony system solution, and the defined/provided processes for support the manually driven processes are used for control of/replacement of processes within said IP-telephony system solution. As referred to earlier, the IP telephony system solution may comprise entities on different levels, e.g. a number of ASPs controlling the system equipment and providing a user portal and an administration portal to a number of SPs, wherein each ASP offers at least a part/parts of its services to said SPs, which in turn offer their services, or at least part(s) thereof, to a number of Enterprises comprising a number of end users.

Particularly the method comprises the step of providing the same spreadsheet to all steps of a created process, i.e. all steps use the same input parameters, or a specific subset thereof. (This is of course dependent on the process itself). The same spreadsheet is input to all steps if the steps need the same input parameters to allow performing the step. Alternatively different spreadsheets are input to each or at least to a plurality of steps of a created process. Particularly, at drawing of the supporting process, the method comprises the steps of; mapping each process step to a version and/or to an identity of a spreadsheet; and mapping each process step to a version and/or to an identity of an OID. More than one process step can be mapped to different versions/identities of the same OID. Different process steps can also be mapped to entirely different OIDs. It is also possible to map a process step to more than one OID, i.e. if the process step needs to be mapped to more than one OID. It depends on the system and on the processes (process steps) involved. Preferably the method includes the step of defining the parameters of a spreadsheet needed as input data to a process step before the process step is initiated. According to different implementations the method comprises the step of automatically or manually updating parameters in a spreadsheet that are reused for different process steps if parameter data is entered/amended/removed.

Particularly the method comprises the steps of; providing/defining a number of processes for supporting execution of manually driven processes relating to or replacing the processes for creation of a new SP/Enterprise, modification of an SP/Enterprise, removal of an SP/Enterprise or creation, modification or deletion of an end user. Particularly the method comprises the step of; providing information about which entity that is responsible for a given step through the OID to which the process step is mapped, when different entities are responsible for different steps within the process, irrespectively of whether the entities are on one and the same system level or not.

### BRIEF DESCRIPTION OF THE DRAWINGS

The invention will in the following be further described in a nonlimiting manner, and with reference to the accompanying drawings, in which:
- Fig. 1: is a block diagram showing a process relating to the creation of a new entity in a system,
- Fig. 2: is a block diagram showing a process substantially similar to that of Fig. 1 for the creation of a new service provider in an IP telephony system solution,
- Fig. 3: is a block diagram illustrating another example of a process relating to the creation of a new subsystem,
- Fig. 4: is a block diagram illustrating implementation of the inventive concept to a process for creation of a new Enterprise in an IP telephony system,
- Fig. 5: illustrates one example of a spreadsheet for creation of a new service provider,
- Fig. 6: is one simple example of an OID,
- Fig. 7: is a flow diagram very schematically describing one example in general terms and indicating factors to be taken into account for one implementation of the inventive concept.

### DETAILED DESCRIPTION OF THE INVENTION

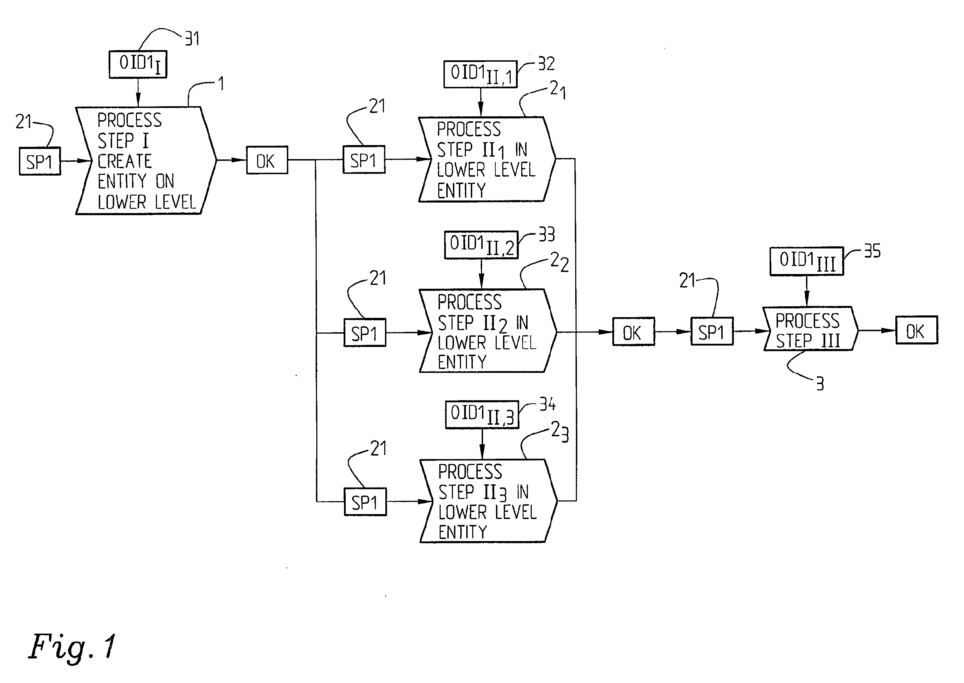

Fig. 1 shows one example of an implementation of the present invention for supporting execution of a manually driven process comprising five process steps of which three steps are executed in parallell. A first process step I relates to the creation of an entity on a lower hierarchical level of a system. It is supposed that the relevant input parameters have been found and written on a spreadsheet SP1 21, and in that an Operation Instruction Document OID1_{I} 31 has been written which is used together with spreadsheet SP1 21 to perform process step I 1. When it has been established that process step I has been completed successfully, i.e. it is OK, it is proceeded with prosecution of process step II₁ 2, process step II₂ 2, and process step II₃ 2, which are executed in parallell. In this particular embodiment the same spreadsheet SP1 21 is relevant for each of these process steps, whereas the Operation Instruction Documents OIDs each comprise a particular document, i.e. referred to as a version or an identity of an OID, here OID1_{II,1} 32, OID1_{II,2} 33 and OID1_{II,3} 34 respectively. When it is established that these process steps have been completed successfully, OK, SP1 21 is input to process step III 3 which uses OID1_{III}. Thus, also for this process step the same spreadsheet is used, in this case. Then it is supposed that the process step of the manually driven process is completed. This was merely one example on a quite uncomplicated process wherein the same spreadsheet can be reused for each process step. It should be clear that, of course, different spreadsheets might have been needed for the different process steps or at least for some of the different process steps, this implementation merely shows one example on an extensive reuse of a spreadsheet, i.e. that the same indata parameters may be needed and relevant for each process step but that dedicated OID documents are needed for each process step.

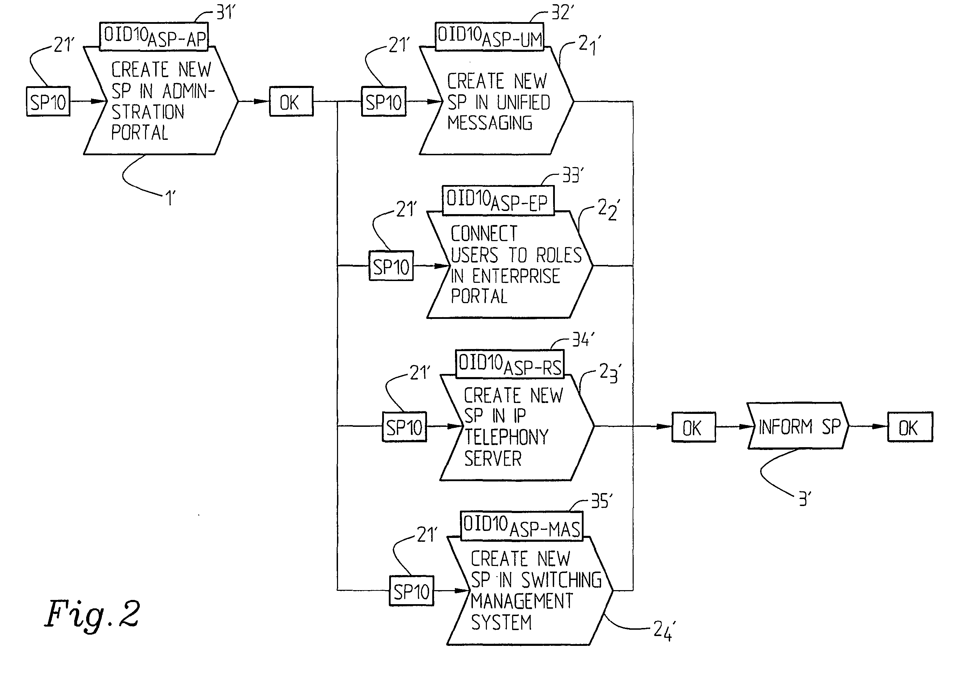

Fig. 2 shows a somewhat similar process as implemented for the creation of a new service provider (SP). As referred to earlier in the application an application service provider (ASP) owns all equipment and provides an administration portal and a user portal to a service provider (SP) to which it sells all, or subsets, of its services. Thus, in this case it is supposed that a spreadsheet SP10 21' is input to the first process step 1' which is concerned with the creation of a new service provider in the administration portal, i.e. it is concerned with customer relationship management and the administration portal acts as a portal for creation of SP1 etc., which is created in a subsystem. OID10_{ASP-AP} 31' is an OID used for performing this step. ASP indicates that the step is performed in the Application Service Provider, and AP relates to administration portal, i.e. the OID is a particular document. When it is established that the completion of this process step is OK, it is proceeded with four, in this case, parallell steps 2₁', 2₂', 2₃', 2₄'. The same spreadsheet SP10 21' can be reused for each of said parallelly executable steps. One of these steps relates to the creation of a new Service Provider (SP) in Unified Messaging, using OID10_{ASP-UM} 32', indicating that the step is performed in ASP for Unified Messaging UM. Another step 2₂' relates to the connection of users to roles in the Enterprise Portal, using OID10_{ASP-EP} 33', also this step performed by the ASP, similar to another parallell step 2₃' relating to the creation of a new SP in the IP telephony server, using OID10_{ASP-RS} 34' and to the step 2₄' relating to the creation of an new service provider in a switching management system, using OID10_{ASP-MAS} 35'. If the completion of these parallelly executable steps is established to be in order, the service provider is informed, which also is performed by the ASP. Then the manually driven process has been executed.

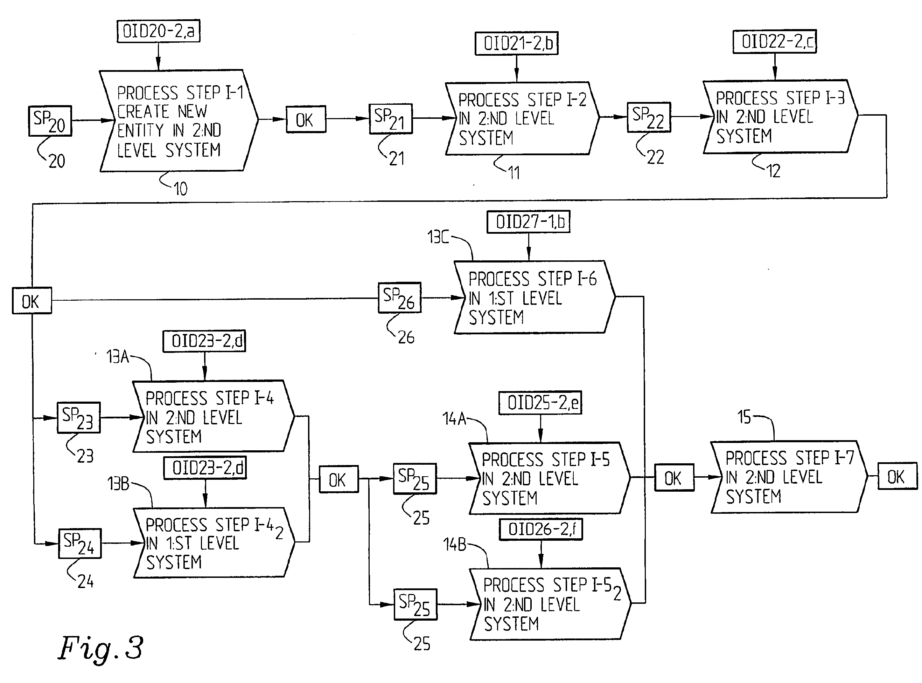

Fig. 3 is a further example of the inventive concept as implemented to execute a manually driven process comprising a number of process steps, which process is somewhat more complicated but which here is illustrated in general terms. In this case different spreadsheets are used for most of the process steps. Thus, the first process step I-1 10 relates to the creation of a new entity in a second level system (hierarchically seen).

Spreadsheet SP₂₀ 20 is input and OID20-2,a is used. The figure 2 in the identification of the OID indicates that the process step is performed in the second level system. At successful completion of step 10, another spreadsheet SP₂₁ 21 is input to process step I-2 11 also in the second level system, and using OID21-2,b. Upon a successful completion, spreadsheet SP22 22 is input to process step I-3 12 also in the second level system using OID22-2,c. These three first steps are performed sequentially. Upon successful completion, it is proceeded with two parallelly executable process steps, namely process step I-4₁ 13A in a second level system using spreadsheet SP₂₃ 23 and OID23-2,d and process step I-4₂ 13B which, however, is performed in a first level system using SP₂₄ 24 and OID24-1,a. When both these steps have been completed successfully, it is proceeded with two further, also parallelly executable, process steps, namely process step I-5₁ 14A in a second level system and process step I-5₂ 14B also in a second level system. These two latter process steps 14A, 14B use the same spreadsheet SP₂₅ 25, but separate OID documents are used, OID25-2,d and OID26-2,f respectively. In parallell with the execution of these two groups of parallelly executable process steps (13A, 13B and 14A, 14B) a further process step I-6 13C is executed in a first level system using spreadsheet SP₂₆ 26 and OID27-1,b. Upon completion of the two groups of parallelly executable process steps and the single process step I-6 13C (also executable parallelly with these two groups) it is proceeded with process step I-7 15 in a second level system, and subsequently, upon its completion, the process is finished.

This was thus an example on the use of different spreadsheets for almost all the process steps, and that process steps can be performed both sequentially and groupwise parallelly as well as parallelly on different levels of the system.

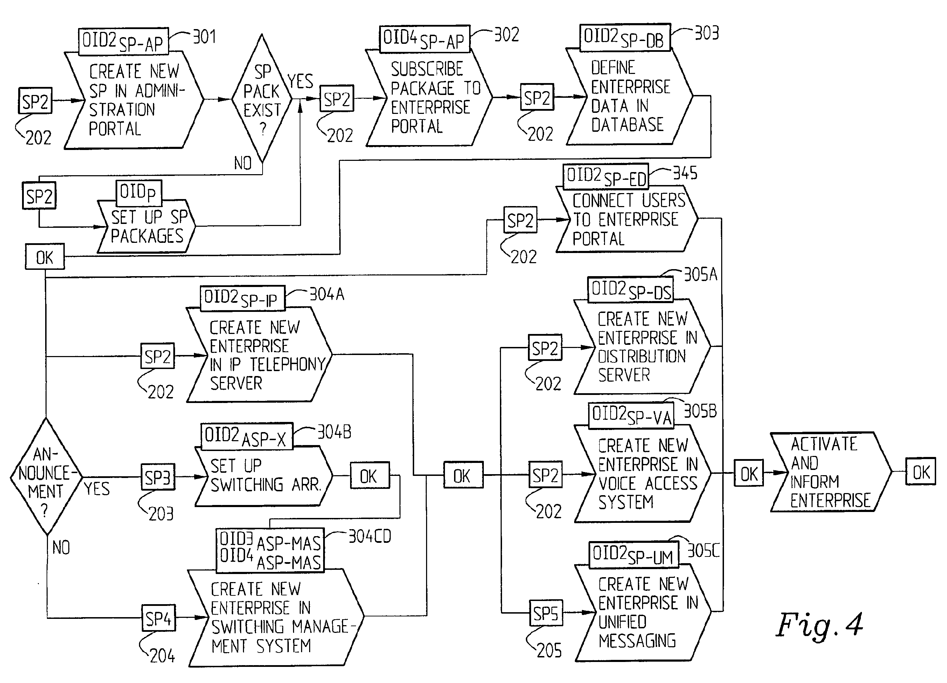

In Fig. 4, a process implemented for IP telephony will again be described. Of course, the inventive combination of manually driven processes, spreadsheets and OIDs can be used for any types of processes, as indicated in Figs. 1 and 3, which are simple examples on processes, i.e. for any type of process when a manual control is required or needed for some reason, and not only for IP telephony solutions.

As already referred to, in order to for example add, remove or update a new SP, an Enterprise or end users, to an IP telephony solution, there are several applications and processes that need to be updated and a lot of parameters that have to be entered in the different processes or systems. Combination of processes, spreadsheets and OIDs will guide the administrators to complete the work and keep the parameters handy when they are needed. There are of course also processes for handling modification of an SP, Enterprise and end users, and for the removal of end users, adding of end users etc. Particularly, examples of processes relevant for IP telephony are: create new SP (cf. Fig. 2), modify SP, remove SP, create new Enterprise (cf. Fig. 4 below), modify Enterprise, remove Enterprise, and create new end user, modify end user end delete end user. Every node or every process step of the respective processes comprises or uses the spreadsheet including all the parameters needed in order to complete the task or the process step. It also includes or uses an OID which gives a thorough description of how to complete the tasks of the process step. The OIDs are written on a system level and they give a detailed description on what steps that have to be performed and in which order they have to be performed. What is unique with such a solution is the combination of processes, OIDs with well defined tasks and spreadsheets defining all the required data for, here, an IP telephony solution. The inventive concept gives proper assistance to the administrators for administration of the system in a controlled way.

The process drawing is used to obtain an overall picture of the steps to be performed, and the order in which they have to be performed. Different tools can be used in order draw a process, for example Powerpoint or Visio. In order to provide control, the process drawing must include a mapping to the appropriate spreadsheet, particularly to a version and/or an identity of a spreadsheet, which is input to a process step. The process drawing moreover includes the mapping to an OID document, particularly its version and/or its identity. As referred to above, the OID describes the tasks to be performed in the certain step. In a particular implementation a process can be developed to contain fault handling and rollback, which however not is illustrated in the figures. Different entities or equipment are responsible for particular steps, on the same or different hierarchical levels.

Fig. 4 relates to the process for creation of a new Enterprise. It is supposed that the spreadsheet SP2 202 is input to the process step create new SP in administration portal using OID2_{SP-AP} 301. Then it is examined if there are any SP packages existing, if not, it is proceeded with the step for setting up SP packages (performed by an ASP) and here also requiring spreadsheet SP2 input. If uses OID_{P} the first step above was performed by an SP node as can be understood from the identification of the OID (SP). If SP packages already exist or if SP packages have been set up, SP2 202 (i.e. the same spreadsheet is reused) is input to the subsequent process step "subscribe package to Enterprise" using OID4_{SP-AP} 302 (performed in SP node). Subsequently it is proceeded with the next, sequential, step "define enterprise data in database" to which step also the same SP2 202 is input as in the proceeding steps. The step uses OID2_{SP-DB} 303. When the step has been completed successfully, it is proceeded, on one hand, with another step relating to the creation of new Enterprise in IP telephony server which is performed in SP also using spreadsheet SP2 202 and an OID2_{SP-IP} 304A. This is performed in parallell with either of two other steps between which there is a dependency, i.e. either one of the step is performed depending on if there is or should be an announcement, if yes, it is proceeded with a step relating to set up of a switching arrangement, to which SP3 203 is input and using OID2_{ASP-X} 304B, indicating that it is performed in an ASP node. If there should be no announcement, another step is performed relating to the creation of a new Enterprise in switching management system, to which SP4 204 is input and which uses two operation instruction documents, namely OID3_{ASP-MAS} 304C and OID4_{ASP-MAS} 304D. For example one of the OIDs may be concerned with the creation of for example an Enterprise, the other with deletion of an Enterprise in a switching management system. When either of these two steps have been performed, as well as the step relating to the creation of a new Enterprise in IP telephony service, it is proceeded with three parallell steps between which there are no dependencies. These steps relate to the creation of a new Enterprise in a distribution server using SP2 202 and using OID2_{SP-DS} 305A, a step relating to the creation of a new Enterprise in voice access system, also using SP2 202, and OID2_{SP-VA} 305B. Finally there is a process step relating to the creation of a new Enterprise in unified messaging to which SP5 205 is input, and which uses OID2_{SP-UM} 305C. In parallel with the latter three parallell steps and the aforementioned parallell steps (of which one is performed in parallell with either of two other steps), another step is performed, also in parallell, which relates to the connection of users to the Enterprise portal. To this step SP2 202 is input and it uses OID2_{ASP-EP} 345. When all the steps have been completed, the Enterprise is activated and informed, whereupon the process has been completed.

The identification of the OIDs indicate whether, for example, it is an ASP or an SP that is responsible for performing the respective step. This figure thus, among others, indicates that for one process step more than one OID can be used, for example two, but there may also be more, for example relating to creation/modification or adding of a new entity etc. It also illustrates reuse of spreadsheets.

The spreadsheets are input to the different steps or activities of a process, and the data in the respective spreadsheet shall, if applicable, be defined before the activity of the step is initiated or started. As can be seen from the above figures, one and the same spreadsheet can be used for several steps or activities.

If a spreadsheet is used for many or several activities, it must detail what parameters are used for a particular task, e.g. for a certain system. The tasks defined in the respective OIDs make use of the spreadsheet information. The spreadsheets can, if applicable, be created in such a way that parameters that are used in multiple places in the spreadsheet automatically are updated when data is entered, removed or updated. Alternatively all updates etc. are handled manually.

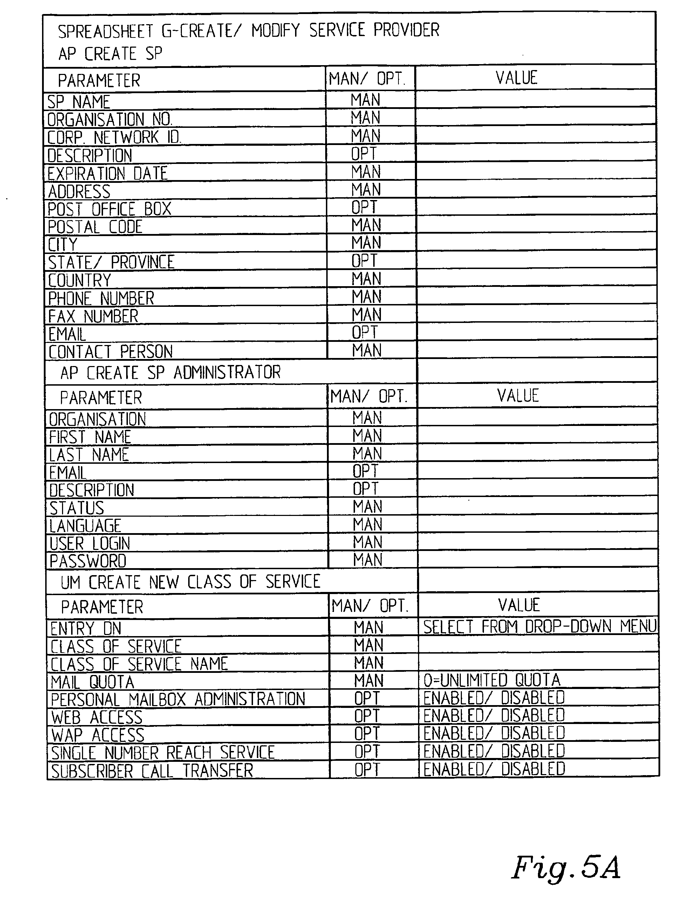

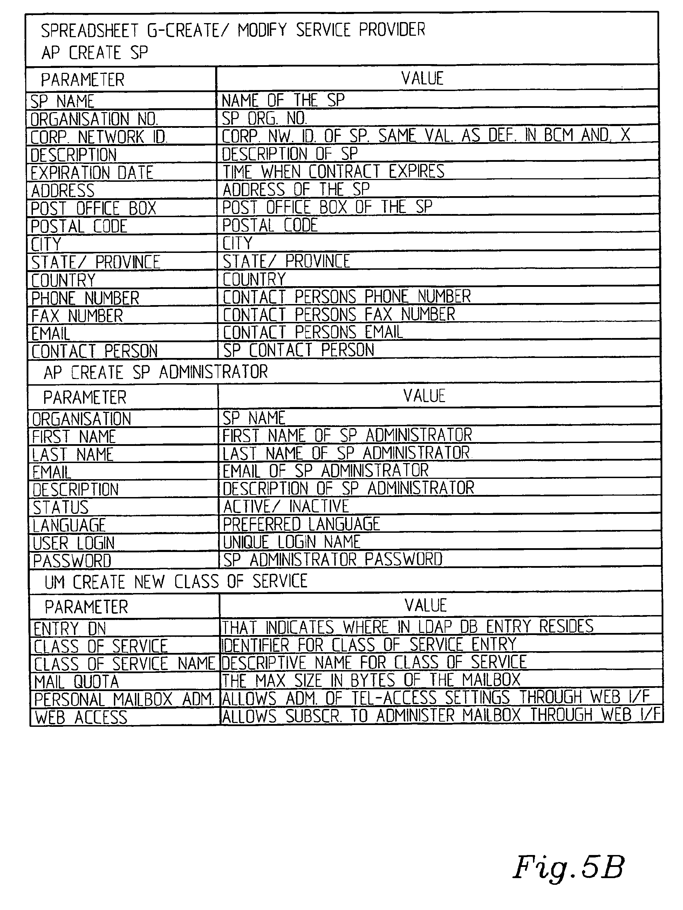

Figs. 5A, 5B illustrates one particular example of a spreadsheet written in Excel that can be used for an IP telephony solution. It should be clear that this is merely one example of a spreadsheet for one particular implementation, and the figure is included merely for purposes of illustrating or showing what a spreadsheet may look like. It may for of course be totally different from the one shown in Figs. 5A, 5B. In Fig. 5B more extensive information is given for the respective parameters.

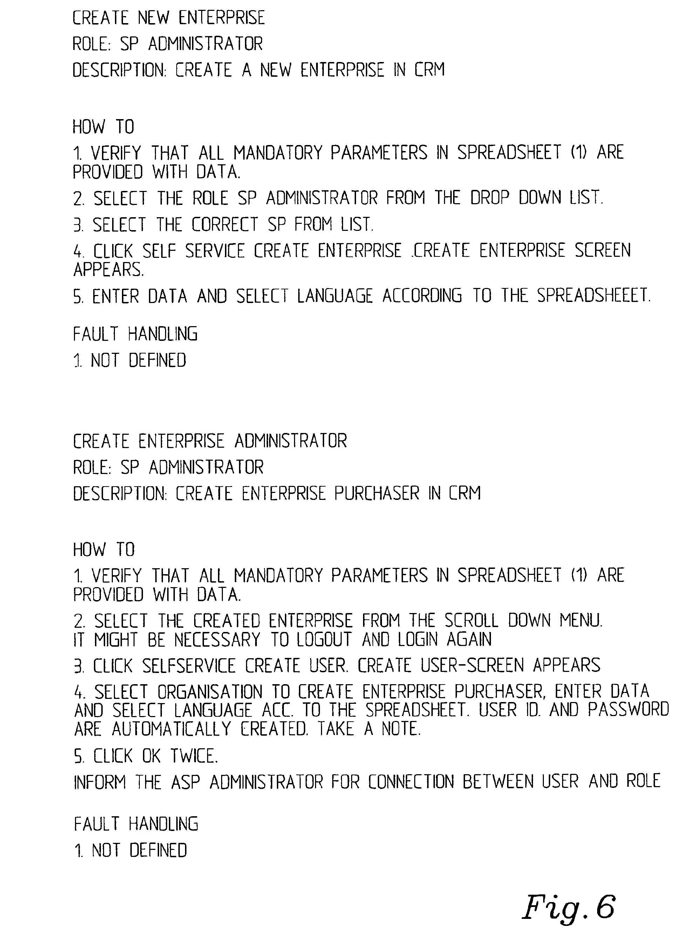

An operation instruction document (OID) is written on different system levels. In for example an IP telephony solution, the ASP, the SP and the Enterprises have access to different parts of the applications, and therefore they can only perform certain tasks or steps. The OIDs are therefore written for ASPs, SPs and Enterprises on the systems where they can perform the respective steps or tasks. The OIDs describe the tasks or steps that should be performed on the respective particular system for a certain activity and in what order the steps should be performed, and if there are any dependencies etc. As referred to above, processes can be developed to contain fault handling and rollback, not illustrated in Fig. 6, which shows one particular example of an OID, which also merely is included for illustrative and exemplifying purposes, similar to Fig. 5A, 5B. It is here supposed that the OID is denoted OID1 SP-CRM relating to the creation of a new Enterprise. One activity relates to create Enterprise, another to create Enterprise administrator and, as can be seen, it is here merely a document describing or giving an operational instruction. CRM here relates to customer relationship management as referred to earlier in the application.

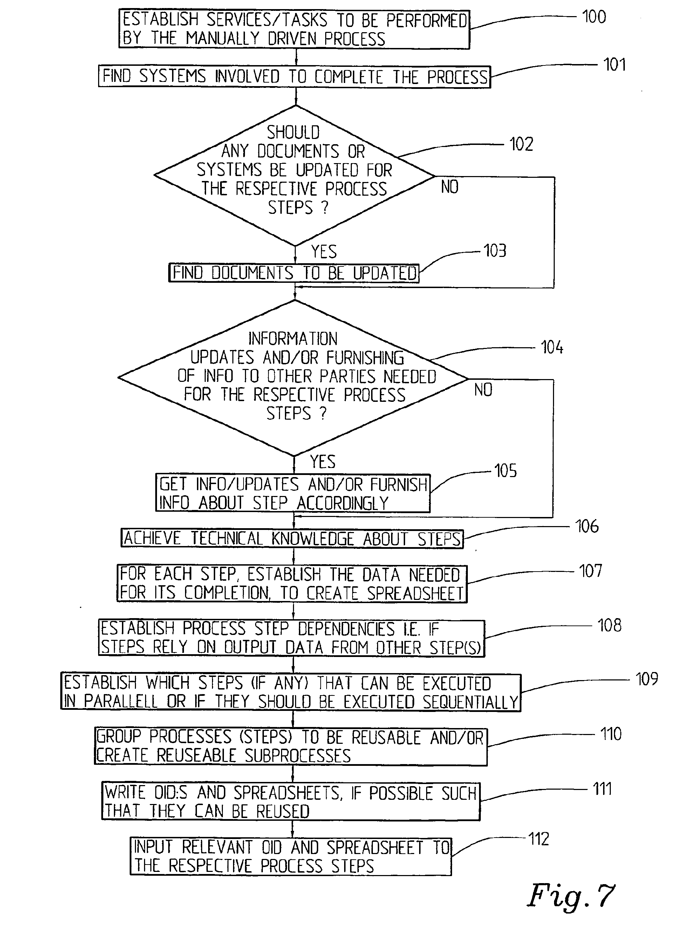

Finally, Fig. 7 is a flow diagram very schematically indicating, and giving a general description of, some steps which are relevant, and what should be considered when processes, OIDs and spreadsheets are developed. There is actually no defined process to define the processes, OIDs and spreadsheets themselves, but in order to define them, a number of factors have to be considered and taken into account. It should be clear that the steps of the flow diagram are given in random order and sometimes not all steps are necessary. However, also further steps may be needed.

Thus, it is supposed that it is established which services or tasks that are to be performed by the manual driven process, 100. It is necessary to establish which systems are involved in order to be able to complete the process, 101. It has to be examined if any documents or systems need to be updated for the different process steps or if there are any documents or systems that need to be updated at all, 102. If yes, the documents or systems etc. that should be updated, are found, 103. Then, or otherwise, i.e. if no document/system need(s) to be updated for the respective steps, it is examined if any information needs to be provided and to "whom" for the respective process step, i.e. if any information is to be furnished to other parties, 104. If yes, information is furnished accordingly (if needed), in any case it is also established if, and then what updates or other information that is required for a process step, 105. In another step technical knowledge about the respective process steps has to be achieved, 106. Then, for each step, the data needed for its completion is established to create the respective spreadsheets, 107. It is also established if there are any process step dependencies, i.e. if steps rely on output data from other steps or from another step, 108. It is also established if there are any steps (if any) that can be executed in parallell, or if they should be executed sequentially, 109. Preferably processes or process steps are grouped, if possible, in order to be reusable, alternatively, or additionally, there is examined if it is possible to create reusable sub-processes, 111. OIDs and spreadsheets are, if possible, written such that they can be reused to the largest possible extent since that may simplify the handling, 111. Finally the relevant OID and spreadsheets are input to the respective process steps, 112. Also "external" inter-relationships as for example organization etc. and other contemplations may be necessary.

It should be noted that for some processes one spreadsheet is sufficient, whereas in other cases there can be a spreadsheet for each step in the process or at least several different spreadsheets may be required. It should also be noted that one process step may require more than one OID. Any variation is in principle possible.

## Claims

1. An arrangement for controlling/supporting control of processes of a system, wherein a number of processes are provided/defined for supporting execution of a number of manually driven processes, each process comprising a number of steps or nodes, for each process step a spreadsheet being provided comprising the indata parameters required for the actions to be taken in the process step,
**characterized in**
**that** for each process step, furthermore an operation instruction is provided which comprises information about the measures/actions to be taken in the process step and about the order in which the actions/measures are to be taken, such that when the actions/measures of a process step are taken, it is proceeded with the subsequent process step of the defined process using the spreadsheet and operation instruction relevant for that subsequent process step, and in that the respective operation instructions are written on system level, the defined/provided process(es) being used for control of/ replace(s) processes within an IP-telephony system solution, and in that the IP-telephony system solution comprises entities on different levels, e.g. a number of Application Service Provider(s) controlling the system equipment and providing a user portal and an administration portal to a number of Service Providers, each Application Service Provider offering at least parts of its services to said Service Providers, each of which in turn offering their services, or at least parts thereof, to a number of Enterprises comprising a number of end users.

2. An arrangement according to claim 1,
**characterized in**
**that** an/each operation instruction is written on different levels of the system.

3. An arrangement according to claim 1 or 2,
**characterized in**
**that** the parameters of a spreadsheet are defined before the relevant process step is initiated.

4. An arrangement according to any one of the preceding claims,
**characterized in**
**that** one and the same spreadsheet is used for two or more steps of a defined/provided process and in that it contains indications of which parameters that are relevant for each respective step.

5. An arrangement according to claim 4,
**characterized in**
**that** some of the parameters of a spreadsheet are used for more than one process step, and in that parameters of a spreadsheet that are reused, for different process steps, are updated automatically when data is modified/added/removed.

6. An arrangement according to claim 4,
**characterized in**
**that** some of the parameters of a spreadsheet are used for more than one process step, and in that parameters of a spreadsheet that are reused, are updated manually.

7. An arrangement according to any one of the preceding claims,
**characterized in**
**that** the defined process (es) support(s) fault handling and rollback.

8. An arrangement according to any one of the preceding claims,
**characterized in**
**that** creation/drawing of a process, includes a mapping to a spreadsheet and to an operation instruction.

9. An arrangement according to claim 8,
**characterized in**
**that** the mapping is done to the relevant version and/or identity of a spreadsheet and to the relevant version and/or identify of an operation instruction respectively.

10. An arrangement according to any one of the preceding claims,
**characterized in**
**that** a number of manually driven processes are used for one or more of the processes relating to creation of a new Service Provider/Enterprise, modification of a Service Provider/Enterprise, removal of a Service Provider/Enterprise or creation of a new end user, modification of an end user or deletion of an end user.

11. An arrangement according to any one of the preceding claims,
**characterized in**
**that** different entities are responsible for different steps within a defined process, and in that information about which entity that is responsible for a given step is given by the operation instruction to which the defined process is mapped.

12. A method for controlling/supporting control of processes of a system, comprising steps, for performing a specific process, of:
- providing/defining a number of processes for supporting execution of manually driven process(es), each comprising a number of process steps (nodes);
- providing a spreadsheet for each process step comprising the relevant indata parameters for at least one process step;
**characterized in**
**that** it further comprises the steps of:
- providing an operation instruction or operation instruction document written on system level and relevant for at least a step of the defined/provided process, which operation instruction at least comprises information about the actions/measures to be taken in said respective step, and about the order in which the actions/measures/ steps are to be taken;
- inputting the spreadsheet parameters and using the relevant operation instruction document relevant for the process step to perform said process step;
- using the operation instruction document to proceed with the subsequent process step by inputting the spreadsheet relevant for that step and using the relevant operation instruction etc. until the process is completed and in that the system comprises an IP telephony system and in that the defined processes are used for control of/replacement of applications/processes within said IP-telephony system comprising entities on different levels, e.g. a number of Application Service Providers controlling the system equipment and providing a user portal and an administration portal to a number of Service Providers, each Application Service Provider offering at least parts of its services to said Service Providers, each of which in turn offer their services, or at least part(s) thereof, to a number of Enterprises comprising a number of end users.

13. A method according to claim 12,
**characterized in**
**that** it comprises the step of:
- providing the same spreadsheet to all steps of a process, i.e. all steps use the same input parameters, or a specific subset thereof.

14. A method according to claim 12,
**characterized in**
**that** it comprises the step of:
- providing a specific spreadsheet to each, or at least to a plurality of, steps of a process.

15. A method according to any one of claims 12-14,
**characterized in**
**that** it comprises the steps of:
- mapping each process step to a version and/or to an identity of the spreadsheet;
- mapping each process step to a version and/or to an identity of an operation instruction.

16. A method according to claim 15,
**characterized in**
**that** it comprises the step of:
- mapping more than one process step to different versions/identities of the same operation instruction.

17. A method according to claim 15 or 16,
**characterized in**
**that** it comprises the step of:
- mapping at least some process steps of a process to different operation instructions.

18. A method according to any one of claims 15-17,
**characterized in**
**that** it comprises the step of:
- mapping a process step to more than one operation instruction.

19. A method according to any one of claims 12-18,
**characterized in**
**that** it comprises the step of:
- defining the parameters of a spreadsheet needed as input data to a process step before initiation of the process step.

20. A method according to any one of claims 12-19,
**characterized in**
**that** it comprises the step of:
- automatically updating parameters in a spreadsheet that are reused for different process steps if parameter data is entered/amended/removed.

21. A method according to any one of claims 12-19,
**characterized in**
**that** it comprises the step of:
- manually updating parameters in a spreadsheet that are reused for different process steps if parameter data is entered/amended/removed.

22. A method according to any one of claims 12-21,
**characterized in**
**that** it comprises the steps of:
- supporting a number of manually driven processes for the processes/applications for creation of a new Service Provider/Enterprise, modification of a Service Provider/Enterprise, removal of a Service Provider/Enterprise or creation, modification or deletion of an end user.

23. A method according to any one of claims 12-22,
**characterized in**
**that** different entities are responsible for different steps within a process, and in that information about which entity that is responsible for a given step is given by the operation instruction to which the process step is mapped.

## Patentansprüche

1. Anordnung zum Steuern bzw. Unterstützen der Steuerung von Prozessen eines Systems, wobei eine Anzahl von Prozessen bereitgestellt bzw. definiert sind, um die Ausführung einer Anzahl manuell angesteuerter Prozesse zu unterstützen, wobei jeder Prozess eine Anzahl von Schritten oder Knoten umfasst, wobei für jeden Prozessschritt eine Kalkulationstabelle bereitgestellt ist, welche die Eingangsdatenparameter umfasst, die für die Aktionen benötigt werden, die in dem Prozessschritt zu unternehmen sind,
**dadurch gekennzeichnet:**
**dass** für jeden Prozessschritt des Weiteren eine Operationsanweisung ausgegeben wird, die Informationen über die Maßnahmen bzw. Aktionen, die in dem Prozessschritt zu unternehmen sind, und über die Reihenfolge, in der die Aktionen bzw. Maßnahmen zu unternehmen sind, umfasst, dergestalt, dass, wenn die Aktionen bzw. Maßnahmen eines Prozessschrittes unternommen werden, er mit dem nachfolgenden Prozessschritt des definierten Prozesses unter Verwendung der Kalkulationstabelle und der Operationsanweisung, die für diesen nachfolgenden Prozessschritt relevant sind, fortgeführt wird, und dass die jeweiligen Operationsanweisungen auf Systemebene geschrieben werden, wobei der oder die definierten bzw. bereitgestellten Prozesse dafür verwendet werden, Prozesse innerhalb einer IP-Telefoniesystemlösung zu steuern oder zu ersetzen, und
**dass** die IP-Telefoniesystemlösung Entitäten auf unterschiedlichen Ebenen umfasst, wobei beispielsweise ein oder mehrere Anwendungsdienstanbieter die Systemausrüstung steuern und für eine Anzahl von Diensteanbietern ein Benutzerportal und ein Verwaltungsportal bereitstellen, wobei jeder Anwendungsdiensteanbieter jenen Diensteanbietern wenigstens Teile seiner Dienste anbietet, wobei jeder von diesen seinerseits seine Dienste oder wenigstens Teile seiner Dienste einer Anzahl von Unternehmen anbietet, die eine Anzahl von Endnutzern umfassen.

2. Anordnung nach Anspruch 1, **dadurch gekennzeichnet, dass** eine bzw. jede Operationsanweisung auf unterschiedlichen Ebenen des Systems geschrieben wird.

3. Anordnung nach Anspruch 1 oder 2, **dadurch gekennzeichnet, dass** die Parameter einer Kalkulationstabelle definiert werden, bevor der relevante Prozessschritt initiiert wird.

4. Anordnung nach einem der vorangehenden Ansprüche, **dadurch gekennzeichnet, dass** ein und dieselbe Kalkulationstabelle für zwei oder mehr Schritte eines definierten bzw. bereitgestellten Prozesses verwendet wird und dass sie Hinweise darauf enthält, welche Parameter für jeden jeweiligen Schritt relevant sind.

5. Anordnung nach Anspruch 4, **dadurch gekennzeichnet, dass** einige der Parameter einer Kalkulationstabelle für mehr als einen einzigen Prozessschritt verwendet werden und dass Parameter einer Kalkulationstabelle, die für verschiedene Prozessschritte wiederverwendet werden, automatisch aktualisiert werden, wenn Daten modifiziert, hinzugefügt oder entfernt werden.

6. Anordnung nach Anspruch 4, **dadurch gekennzeichnet, dass** einige der Parameter einer Kalkulationstabelle für mehr als einen einzigen Prozessschritt verwendet werden und dass Parameter einer Kalkulationstabelle, die wiederverwendet werden, manuell aktualisiert werden.

7. Anordnung nach einem der vorangehenden Ansprüche, **dadurch gekennzeichnet, dass** der oder die definierten Prozesse Störungsbeseitigung und Wiederholung unterstützen.

8. Anordnung nach einem der vorangehenden Ansprüche, **dadurch gekennzeichnet, dass** das Erstellen bzw. Zeichnen eines Prozesses ein Abbilden auf eine Kalkulationstabelle und auf eine Operationsanweisung beinhaltet.

9. Anordnung nach Anspruch 8, **dadurch gekennzeichnet, dass** das Abbilden auf die relevante Version und bzw. oder Identität einer Kalkulationstabelle bzw. auf die relevante Version und bzw. oder Identität einer Operationsanweisung erfolgt.

10. Anordnung nach einem der vorangehenden Ansprüche, **dadurch gekennzeichnet, dass** eine Anzahl manuell angesteuerter Prozesse für einen oder mehrere der Prozesse verwendet werden, die sich auf die Erstellung eines neuen Diensteanbieters bzw. Unternehmens, die Modifizierung eines Diensteanbieters bzw. Unternehmens, das Entfernen eines Diensteanbieters bzw. Unternehmens oder die Erstellung eines neuen Endnutzers, die Modifizierung eines Endnutzers oder das Löschen eines Endnutzers beziehen.

11. Anordnung nach einem der vorangehenden Ansprüche, **dadurch gekennzeichnet, dass** verschiedene Entitäten für verschiedene Schritte innerhalb eines definierten Prozesses verantwortlich sind und dass Informationen darüber, welche Entität für einen bestimmten Schritt verantwortlich ist, durch die Operationsanweisung gegeben wird, auf die der definierte Prozess abgebildet wird.

12. Verfahren zum Steuern bzw. Unterstützen der Steuerung von Prozessen eines Systems, umfassend die folgenden Schritte zum Ausführen eines bestimmten Prozesses:
- Bereitstellen bzw. Definieren einer Anzahl von Prozessen zum Unterstützen der Ausführung von einem oder mehreren manuell angesteuerten Prozessen, von denen jeder eine Anzahl von Prozessschritten (Knoten) umfasst;
- Bereitstellen einer Kalkulationstabelle für jeden Prozessschritt, welche die relevanten Eingangsdatenparameter für wenigstens einen Prozessschritt umfasst;
**dadurch gekennzeichnet, dass** es des weiteren folgende Schritte umfasst:
- Bereitstellen einer Operationsanweisung oder eines Operationsanweisungsdokuments, die bzw. das auf Systemebene geschrieben wurde und für wenigstens einen Schritt des definierten bzw. bereitgestellten Prozesses relevant ist, wobei diese Operationsanweisung wenigstens Informationen über die Aktionen bzw. Maßnahmen, die in dem jeweiligen Schritt zu unternehmen sind, und über die Reihenfolge, in der die Aktionen, Maßnahmen oder Schritte zu unternehmen sind, umfasst;
- Eingeben der Kalkulationstabellenparameter und Verwenden des relevanten Operationsanweisungsdokuments, das für den Prozessschritt relevant ist, um diesen Prozessschritt auszuführen;
- Verwenden des Operationsanweisungsdokuments zum Fortfahren mit dem nachfolgenden Prozessschritt durch Eingeben der Kalkulationstabelle, die für diesen Schritt relevant ist, und Verwenden der relevanten Operationsanweisung usw., bis der Prozess vollendet ist, und dass die definierten Prozesse zur Steuerung bzw. zum Ersatz von Anwendungen bzw. Prozessen innerhalb des IP-Telefoniesystems verwendet werden, das Entitäten auf verschiedenen Ebenen umfasst, wobei beispielsweise eine Anzahl von Anwendungsdiensteanbietern die Systemausrüstung steuern und für eine Anzahl von Diensteanbietern ein Benutzerportal und ein Verwaltungsportal bereitstellen, wobei jeder Anwendungsdienstanbieter jenen Dienstanbietern wenigstens Teile seiner Dienste anbietet, wobei jeder von diesen seinerseits seine Dienste oder wenigstens einen oder mehrere Teile seiner Dienste einer Anzahl von Unternehmen anbietet, die eine Anzahl von Endnutzern umfassen.

13. Verfahren nach Anspruch 12, **dadurch gekennzeichnet, dass** es folgenden Schritt umfasst:
- Bereitstellen derselben Kalkulationstabelle für alle Schritte eines Prozesses, d. h. alle Schritte verwenden dieselben Eingangsparameter oder eine bestimmte Teilmenge davon.

14. Verfahren nach Anspruch 12, **dadurch gekennzeichnet, dass** es folgenden Schritt umfasst:
- Bereitstellen einer bestimmten Kalkulationstabelle für jeden Schritt - oder wenigstens mehrere Schritte - eines Prozesses.

15. Verfahren nach einem der Ansprüche 12 bis 14, **dadurch gekennzeichnet, dass** es die folgenden Schritte umfasst:
- Abbilden jedes Prozessschrittes auf eine Version und bzw. oder auf eine Identität des Kalkulationstabelle;
- Abbilden jedes Prozessschrittes auf eine Version und bzw. oder auf eine Identität einer Operationsanweisung.

16. Verfahren nach Anspruch 15, **dadurch gekennzeichnet, dass** es folgenden Schritt umfasst:
- Abbilden von mehr als einem einzigen Prozessschritt auf verschiedene Versionen bzw. Identitäten derselben Operationsanweisung.

17. Verfahren nach Anspruch 15 oder 16, **dadurch gekennzeichnet, dass** es folgenden Schritt umfasst:
- Abbilden wenigstens einiger Prozessschritte eines Prozesses auf verschiedene Operationsanweisungen.

18. Verfahren nach einem der Ansprüche 15 bis 17, **dadurch gekennzeichnet, dass** es folgenden Schritt umfasst:
- Abbilden eines Prozessschritts auf mehr als eine einzige Operationsanweisung.

19. Verfahren nach einem der Ansprüche 12 bis 18, **dadurch gekennzeichnet, dass** es folgenden Schritt umfasst:
- Definieren der Parameter einer Kalkulationstabelle, die als Eingangsdaten für einen Prozessschritt benötigt werden, vor der Initiierung des Prozessschritts.

20. Verfahren nach einem der Ansprüche 12 bis 19, **dadurch gekennzeichnet, dass** es folgenden Schritt umfasst:
- automatisches Aktualisieren von Parametern in einer Kalkulationstabelle, die für verschiedene Prozessschritte wiederverwendet werden, wenn Parameterdaten eingegeben, geändert oder entfernt werden.

21. Verfahren nach einem der Ansprüche 12 bis 19, **dadurch gekennzeichnet, dass** es folgenden Schritt umfasst:
- manuelles Aktualisieren von Parametern in einer Kalkulationstabelle, die für verschiedene Prozessschritte wiederverwendet werden, wenn Parameterdaten eingegeben, geändert oder entfernt werden.

22. Verfahren nach einem der Ansprüche 12 bis 21, **dadurch gekennzeichnet**, **dadurch gekennzeichnet, dass** es folgenden Schritt umfasst:
- Unterstützen einer Anzahl von manuell angesteuerten Prozessen für die Prozesse bzw. Anwendungen zum Erstellen eines neuen Diensteanbieters oder Unternehmens, zum Modifizieren eines Dienstanbieters oder Unternehmens, zum Entfernen eines Diensteanbieters oder Unternehmens oder zum Erstellen, Modifizieren oder Löschen eines Endnutzers.

23. Verfahren nach einem der Ansprüche 12 bis 22, **dadurch gekennzeichnet, dass** verschiedene Entitäten für verschiedene Schritte innerhalb eines Prozesses verantwortlich sind und dass Informationen darüber, welche Entität für einen bestimmten Schritt verantwortlich ist, durch die Operationsanweisung gegeben wird, auf die der Prozessschritt abgebildet wird.

## Revendications

1. Agencement destiné à commander ou à supporter la commande des processus d'un système, dans lequel un certain nombre de processus sont fournis ou définis afin de supporter l'exécution d'un certain nombre de processus pilotés manuellement, chaque processus comprenant un certain nombre d'étapes ou de noeuds, une feuille de calcul étant fournie pour chaque étape de processus et comprenant les paramètres de données d'entrée nécessaires pour les actions à entreprendre au cours de l'étape de processus,
**caractérisé en ce que**, pour chaque étape de processus, il est en outre fourni une instruction d'opération qui comprend des informations sur les mesures ou actions à entreprendre dans l'étape de processus et sur l'ordre dans lequel les actions ou mesures doivent être entreprises, de telle manière que, lorsque les actions ou mesures d'une étape de processus sont entreprises, il est procédé à l'étape de processus suivante dans le processus défini, en utilisant la feuille de calcul et l'instruction d'opération intéressant cette étape de processus suivante, **en ce que** les instructions d'opération respectives sont écrites au niveau système, le ou les processus définis ou fournis étant utilisés pour commander une solution de système de téléphonie sur IP ou remplacer des processus dans cette solution, et **en ce que** la solution de système de téléphonie sur IP comprend des entités de niveaux différents, par exemple un certain nombre de fournisseurs de services applicatifs commandant l'équipement du système et fournissant un portail pour les utilisateurs et un portail pour l'administration à un certain nombre de fournisseurs de services, chaque fournisseur de services applicatifs offrant au moins des parties de ses services auxdits fournisseurs de service, chacun de ceux-ci, à son tour, offrant ses services, ou au moins des parties de ceux-ci, à un certain nombre d'entreprises comprenant un certain nombre d'utilisateurs.

2. Agencement selon la revendication 1, **caractérisé en ce qu'**une ou chaque instruction d'opération est écrite à des niveaux différents du système.

3. Agencement selon la revendication 1 ou 2, **caractérisé en ce que** les paramètres d'une feuille de calcul sont définis avant que l'étape de processus considérée ne soit lancée.

4. Agencement selon l'une quelconque des revendications précédentes, **caractérisé en ce qu'**une seule et même feuille de calcul est utilisée pour deux étapes ou plus d'un processus défini ou fourni et **en ce qu'**elle contient des indications sur les paramètres qui sont pertinents pour chacune des étapes respectives.

5. Agencement selon la revendication 4, **caractérisé en ce que** certains des paramètres d'une feuille de calcul sont utilisés pour plus d'une étape de processus et **en ce que** des paramètres d'une feuille de calcul qui sont réutilisés pour différentes étapes de processus sont mis à jour automatiquement lorsque des données sont modifiées, ajoutées ou supprimées.

6. Agencement selon la revendication 4, **caractérisé en ce que** certains des paramètres d'une feuille de calcul sont utilisés pour plus d'une étape de processus et **en ce que** des paramètres d'une feuille de calcul qui sont réutilisés sont mis à jour manuellement.

7. Agencement selon l'une quelconque des revendications précédentes, **caractérisé en ce que** le ou les processus définis supportent la gestion des erreurs et le retour en arrière.

8. Agencement selon l'une quelconque des revendications précédentes, **caractérisé en ce que** la création ou le tracé d'un processus comprend un mappage avec une feuille de calcul et avec une instruction d'opération.

9. Agencement selon la revendication 8, **caractérisé en ce que** le mappage est réalisé avec la version et/ou l'identité pertinente d'une feuille de calcul et avec la version et/ou l'identité pertinente d'une instruction d'opération, respectivement.

10. Agencement selon l'une quelconque des revendications précédentes, **caractérisé en ce qu'**un certain nombre de processus pilotés manuellement sont utilisés pour un ou plusieurs des processus intéressant la création d'un nouveau fournisseur de service ou d'une nouvelle entreprise, la suppression d'un fournisseur de service ou d'une entreprise ou la création d'un nouvel utilisateur, la modification d'un utilisateur ou la suppression d'un utilisateur.

11. Agencement selon l'une quelconque des revendications précédentes, **caractérisé en ce que** différentes entités sont responsables de différentes étapes à l'intérieur d'un processus défini et **en ce que** des informations sur l'entité qui est responsable d'une étape considérée sont données par l'instruction d'opération avec laquelle le processus défini a été mappé.

12. Procédé destiné à commander ou à supporter la commande des processus d'un système, comprenant des étapes, pour l'exécution d'un processus spécifique, consistant à :
- fournir ou définir un certain nombre de processus afin de supporter l'exécution d'un certain nombre de processus pilotés manuellement, chaque processus comprenant un certain nombre d'étapes (noeuds) ;
- fournir pour chaque étape de processus une feuille de calcul comprenant les paramètres de données d'entrée pertinents pour au moins une étape de processus ;
**caractérisé en ce qu'**il comprend en outre les étapes consistant à :
- fournir une instruction d'opération ou un document d'instructions d'opération, écrit au niveau système et pertinent pour au moins une étape du processus défini ou fourni, laquelle instruction d'opération comprend au moins des informations sur les mesures ou actions à entreprendre dans ladite étape de processus respective et sur l'ordre dans lequel les actions ou mesures ou étapes doivent être entreprises ;
- entrer les paramètres de feuille de calcul et utiliser le document d'instructions d'opération pertinent pour l'étape de processus, afin d'exécuter ladite étape de processus ;
- utiliser le document d'instructions d'opération pour procéder à l'étape de processus suivante, en entrant la feuille de calcul pertinente pour cette étape et en utilisant l'instruction d'opération pertinente, etc., jusqu'à ce que le processus soit achevé, **en ce que** le système comprend un système de téléphonie sur IP et **en ce que** les processus définis sont utilisés pour commander ou remplacer des applications ou des processus dans ledit système de téléphonie sur IP, en comprenant des entités à des niveaux différents, par exemple un certain nombre de fournisseurs de services applicatifs commandant l'équipement du système et fournissant un portail pour les utilisateurs et un portail pour l'administration à un certain nombre de fournisseurs de services, chaque fournisseur de services applicatifs offrant au moins des parties de ses services auxdits fournisseurs de service, chacun de ceux-ci, à son tour, offrant ses services, ou au moins une ou plusieurs parties de ceux-ci, à un certain nombre d'entreprises comprenant un certain nombre d'utilisateurs finaux.

13. Procédé selon la revendication 12, **caractérisé en ce qu'**il comprend l'étape consistant à :
- fournir la même feuille de calcul à toutes les étapes d'un processus, c'est-à-dire que toutes les étapes utilisent les mêmes paramètres d'entrée, ou un sous-ensemble spécifique de ceux-ci.

14. Procédé selon la revendication 12, **caractérisé en ce qu'**il comprend l'étape consistant à :
- fournir une feuille de calcul spécifique à chacune des étapes d'un processus ou au moins à une pluralité de celles-ci.

15. Procédé selon l'une quelconque des revendications 12 à 14, **caractérisé en ce qu'**il comprend les étapes consistant à :
- mapper chaque étape de processus avec la version et/ou l'identité pertinente de la feuille de calcul ;
- mapper chaque étape de processus avec la version et/ou l'identité pertinente d'une instruction d'opération.

16. Procédé selon la revendication 15, **caractérisé en ce qu'**il comprend l'étape consistant à :
- mapper plus d'une étape de processus avec différentes versions ou identités de la même instruction d'opération.

17. Procédé selon la revendication 15 ou 16, **caractérisé en ce qu'**il comprend l'étape consistant à :
- mapper au moins certaines étapes de processus d'un processus avec différentes instructions d'opération.

18. Procédé selon l'une quelconque des revendications 15 à 17, **caractérisé en ce qu'**il comprend l'étape consistant à :
- mapper une étape de processus avec plus d'une instruction d'opération.

19. Procédé selon l'une quelconque des revendications 12 à 18, **caractérisé en ce qu'**il comprend l'étape consistant à :
- définir les paramètres d'une feuille de calcul qui sont nécessaires comme données d'entrée d'une étape de processus avant le lancement de l'étape de processus.

20. Procédé selon l'une quelconque des revendications 12 à 19, **caractérisé en ce qu'**il comprend l'étape consistant à :
- mettre à jour automatiquement dans une feuille de calcul des paramètres qui sont réutilisés pour différentes étapes de processus si des données de paramètres sont entrées, modifiées ou supprimées.

21. Procédé selon l'une quelconque des revendications 12 à 19, **caractérisé en ce qu'**il comprend l'étape consistant à :
- mettre à jour manuellement dans une feuille de calcul des paramètres qui sont utilisés pour différentes étapes de processus si des données de paramètres sont entrées, modifiées ou supprimées.

22. Procédé selon l'une quelconque des revendications 12 à 21, **caractérisé en ce qu'**il comprend les étapes consistant à :
- supporter un certain nombre de processus pilotés manuellement pour les processus ou applications de création d'un nouveau fournisseur de services ou d'une nouvelle entreprise, de modification d'un fournisseur de services ou d'une entreprise, de suppression d'un fournisseur de services ou d'une entreprise, ou de création, de modification ou de suppression d'un utilisateur final.

23. Procédé selon l'une quelconque des revendications 12 à 22, **caractérisé en ce que** différentes entités sont responsables de différentes étapes dans un processus et **en ce que** des informations sur l'entité qui est responsable d'une étape considérée sont données par l'instruction d'opération avec laquelle l'étape de processus a été mappée.
